# EUROPEAN PATENT SPECIFICATION

(11) **EP 0 886 619 B1**
(45) Date of publication and mention of the grant of the patent: **20.10.1999**
(21) Application number: 96912204.3
(22) Date of filing: 24.04.1996
(51) Int. Cl.: B65G 57/04, B65G 47/91, B65H 29/24, B65H 31/24

(54) **MACHINE FOR LOADING, UNLOADING AND UNITING STRIPS OF LEATHER AND OF SYNTHETIC MATERIALS IN GENERAL**
VORRICHTUNG ZUM LADEN, ENTLADEN UND VERBINDEN VON LEDERSTREIFEN UND VON KUNSTSTOFFMATERIALIEN IM ALLGEMEINEN
MACHINE SERVANT A CHARGER, DECHARGER ET UNIR DES BANDES DE CUIR ET DE MATIERES SYNTHETIQUES EN GENERAL

(30) Priority: 15.03.1996 IT MI960510
(43) Date of publication of application: 30.12.1998
(73) Proprietor: Galli S.p.a., 27029 Vigevano (IT)
(72) Inventor: GALLI, Emilio, I-27029 Vigevano (IT)
(74) Representative: Filippi, Remo
(86) International application number: IT9600083
(87) International publication number: WO9734823

(56) References cited:
- EP-A- 0 272 398
- DE-A- 1 913 583
- FR-A- 2 516 901

## Description

The invention concerns automatic machines for transferring finished or semi-finished products of a substantially strip-like shape from one place to another.

Automatic machines are commonly used for transferring strips of leather or of synthetic materials generally for processing and assembling to other strips and, after that, for transferring the finished product to storage.

Use of these machines normally involves considerable periods of down time as, before a strip can be taken from a pile, transfer of the preceeding strip must be completed.

The length, thinness and flexibility of the material used for these strips, as well as their fragility, create problems over automatic removal from one place to another and such operations take time thus raising costs and causing a considerable waste of materials.

Association of two or more strips increases difficulties over moving them. Bearing in mind the great number of products, such as belts, that are produced, it is clear that the problems of moving these finished and semi-finished products are of some importance.

The machine here described solves these problems, at the same time ensuring rapid and satisfactory execution as will be explained below.

Subject of the invention is a machine for loading, unloading and uniting strips of leather or of synthetic materials in general.

This machine comprises an oblong structure with a top of a substantially constant transversal section, in the form of a regular trapozoid with the lesser base facing upwards.

In this lesser base is a longitudinal axial slit from which emerges the upper part of a continuous conveyor belt supported at the two ends by two rollers.

Above said lesser base a horizontal oblong body oscillates, its two ends being supported at the top of two parallel vertical plates, the lower ends freely turning round pins placed in the sides of the machine's oblong structure.

Said oblong body is fixed to a gear wheel that meshes,through an idling wheel supported by one of the plates, with a larger gear wheel fixed to one side of the oblong structure and coaxial with the axis of rotation of the plate.

Oscillation of the plates around their lower axis of rotation is obtained by means of a kinematic device.

At each oscillation of said pair of plates, due to movement of the idling wheel round the teeth of the gear wheel fixed to the plates, the oblong body is therefore caused to oscillate in the reverse direction.

Said oblong body carries a series of devices for loading and unloading the strips, consisting of fans with suction cups placed at the ends of pistons in hydraulic and pneumatic cylinders.

These cylinders are orthogonally supported by the oblong body along its central longitudinal axis.

Means are placed on the sides of the oblong structure for carrying piles of strips, the base on which said strips rest being orthogonal to said sides.

The arc of oscillation of the side plates is such that, at the end of each oscillation, the axes of pistons in the suction fans lie substantially parallel respectively to one side or another of the oblong structure and a short distance from said sides.

Piston movements and suction stages can therefore be programmed in such a way that the suction cups pick up a strip from the pile below at each oscillation.

Movement of the oblong body, so that the vertical axis of the suction fans passes through the axis of horizontal symmetry of the continuous belt, permits transfer of the strip picked up from said continuous belt, moving it towards the discharging area, or else, by means of said suction fan, permits a strip coming in from a machine to be picked up from the continuous belt. Rotation of the plates towards one side of the oblong structure determines alignment of the suction fan pistons with the means of support, fixed onto said side to carry the pile of strips, and then release of the picked-up strip onto the means of support at the side so that a pile of strips is gradually formed upon it.

The suction fans can also be used to pick up a strip, from a pile formed at one side of the machine, and carry it onto a strip lying on the conveyor belt and then, by means of said belt, transfer the two strips together, so forming a pair.

It is of course possible to associate together, as described above, two or more strips and, contrarywise, pick up one or more strips and lay them on one or another of the means of support placed on the sides of the oblong structure of the machine.

The kinematic device that determines oscillations of the pair of plates at the sides of the oblong body, is the piston of a hydraulic and pneumatic cylinder.

The suction fans are placed in one or more parallel units aligned along the axis of symmetry of the oblong body and orthogonal to said axis.

The means of support carrying the piles of strips, to be loaded or unloaded, in relation to the inclined sides of the oblong structure, can be fixed at preferred heights on said sides and can also be fixed to mechanical means of translation which permit height to be varied in relation to the suction fans.

The machine comprises loading and unloading trolleys on wheels whose structure, on the inner side, substantially matches with the sides of the oblong structure of the machine described.

Structure of the loaders consists of a horizontal base, of a vertical side practically parallel to the vertical side of the oblong structure, and of a side whose inclination is substantially equal to that of the inclined side of the oblong structure.

On the outer face of said inclined side of the trolley, there is an orthogonal support for piling up strips to be loaded or unloaded.

For transferring a quantity of strips piled up on said trolley,it is thus possible to bring the trolley close to the oblong structure of the machine until the two structures match.

Matching up in this way determines alignment of the trajectory of the pistons in the suction fans with the axis of said piles of strips and it is thus possible, as already described, to transfer strips from the pile to the continuous conveyor belt on the oblong structure, and vice versa.

The machine is controlled by an electronic drive unit which, by means of static and dynamic sensors, automatically suits speed of the conveyor belt on the oblong body and of the suction fans to the speed of the machine to which the strips are transferred from the loaders, or to that of the machine from which the strips are transferred to the loaders, and automatically adapts values of strip movement according to length.

The machine offers evident advantages.

By oscillation of the suction fans and position of loading-unloading means on the two inclined sides of the machine, down time is avoided since two areas or two loading-unloading trolleys can be served simultaneously.

As there are two loading-unloading areas, operations of loading or unloading make possible a variety of strip assembly combinations and loading or unloading of semi-finished or fully finished strips.

Association between loading-unloading trolleys and the conveyor belt at the top of the machine greatly facilitates transfer of strips from one operating machine to another, and also facilitates what is otherwise complex work of assembling two or more strips taking them from different loaders.

The machine therefore carries out several functions, namely: loading, unloading, uniting, selecting.

Automatic regulation of the operative stages of the machine, and especially of the values and timing of oscillation by the suction fans, of suction fan movement and of suction stages according to length of strips as well as operating stages of the machines upstream and downstream, greatly facilitates the complex and delicate operations needed for moving such highly flexible, long, slender and fragile objects with the greatest precision.

Structures of the machine itself as well as those of the loading-unloading means are all very compact limiting bulk to the minimum.

Characteristics and purposes of the invention will be made still clearer by the following examples of its execution illustrated by diagrammatically drawn figures.

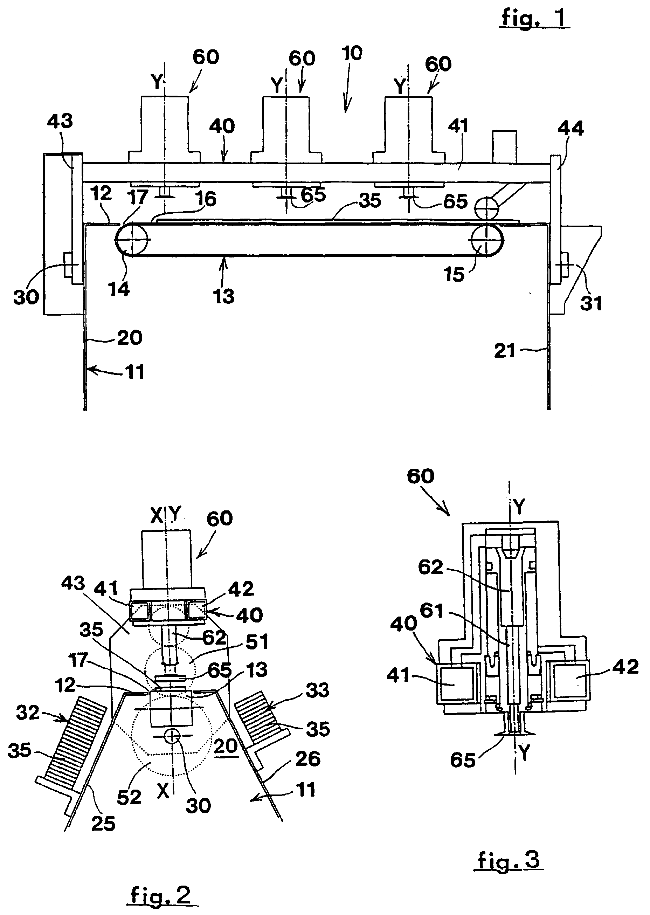

- Fig.1: Side view of the machine with oscillating suction units.
- Fig.2: Front view of the same machine.
- Fig.3: Detail of a suction unit.

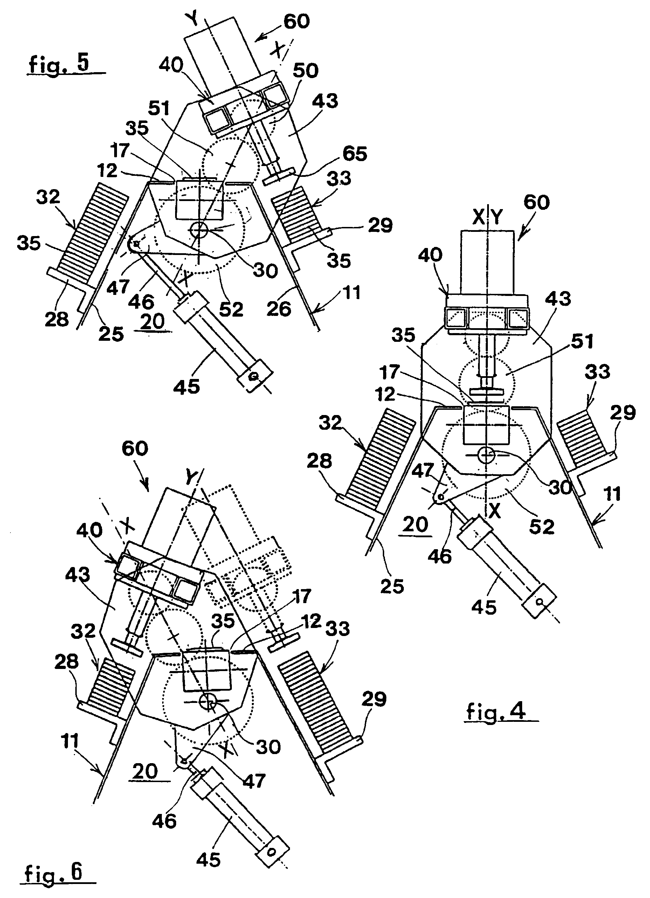

- Fig.4: Front view of the machine with suction units and central oscillating control device.
- Fig.5: As above with a suction body turned towards one side of the machine.
- Fig.6: As above with a suction body turned towards the other side.
- Fig.7: Lateral diagram of the machine, side view, with a loading trolley up against one side.
- Fig.8: A second loading trolley approaching the machine's other side.

The machine 10 comprises a fixed oblong structure 11 having a constant substantially trapezoid transversal section, with heads 20 and 21 and a flat rectangular top 12 substantially corresponding to the lesser base of the trapezoid.

In said lesser base is a rectangular slit 17 through which emerges the upper part 16 of a continuous belt 13 supported at each end by rollers 14, 15.

At the top of said structure 11 is an oblong body 40 formed of a pair of shaped metal parts 41 and 42, able to rotate freely at the top of two plates 43 and 44 articulated at their lower ends, respectively on the two heads 20 and 21 of tbe oblong structure, round the axes 30 and 31.

The oblong body 40 is fixed to a gear wheel 50 that, by means of an idling wheel 51 supported by one lateral plate 43, meshes with a larger gear wheel 52 fixed to one head 20 of the oblong structure 11 of the machine coaxial with the axis of rotation 30 of said plate.

The axes of the three gear wheels 50-52 pass through the axis of symmetry XX of the lateral plate 43.

The oblong body 40 carries a set of suction bodies 60 whose axes are parallel and orthogonal to the longitudinal axis of symmetry of said oblong body.

In each suction body is a central piston 61 of a hydraulic and pneumatic cylinder 62 between the two shaped parts 41 and 42 of the oblong body 40, there being at the outer end of the piston, facing towards the above conveyor belt 13, a suction cup 65 connected by a suction tube to create a vacuum.

A hydraulic and pneumatic means controlled by an electronic drive unit determines movement, in suitable stages, of the piston and therefore of the suction cup, and stages of suction.

The plates 43 and 44 are operated by a hydraulic cylinder 45 which, by means of the piston 46 and shelf 47 fixed to the plate 43, determines oscillation, in accordance with the macihine's program, of said plates from one side to the other of the vertical central line of the oblong structure of the machine following a certain arc of a circle.

On the inclined sides 25 and 26 of the oblong structure 11 of the machine 10 are means for supporting piles 32 and 33 of strips 35 to be transferred or picked up.

Oscillations of the oblong body 40 are such that, on completion of its oscillations in one direction or in the other, the axes YY of the suction bodies 60 coincide with the longitudinal plane of symmetry of the piles of strips already laid, or to be laid, on the means 28, 29 of support orthogonal to the sides 25, 26 of the machine 10.

In view of the foregoing, strips in a pile deposited at one side of the machine can be picked up and laid down on the conveyor belt, another strip be picked up from a pile of strips placed on the other side of the machine and laid over the first one, a pair of strips be moved towards a processing machine operating downstream of the loading machine or, on the contrary, a certain strip be taken from a processing machine by means of the conveyor belt, said strip be taken from the conveyor belt by the suction fans and deposited on the means of support present on one side or the other side of the machine.

All this is possible by determining, at the end of each oscillation made by the oblong body 40, movement of the pistons in the suction fans 60 to their optimum distance from the pile of strips on one side of the machine, an adequate suction stage, transfer of the picked-up strip onto the conveyor belt and stoppage of the suction fans in the central vertical position in relation to said belt, for laying down or picking up the strip.

Having done this the oblong body 40 with the suction fans 60 can pass over to the other side of the machine to pick up or lay down strips on the means of support for the piles on said side.

An electronic drive unit controls stages of movement of the oblong body 40, namely its lateral position on one side of the machine, the central position in relation to the conveyor belt and the lateral position on the other side of the machine, and also controls movement of the suction fan pistons both in timing and length of their movements, further governing as well periods of suction or cessation of suction by the suction cups at the ends of the pistons.

With this machine strips to be processed, semi-finished or finished strips can be transferred from one machine to another upstream and downstream of the first.

To facilitate sich transfer, trolleys 80 are provided their shape substantially corresponding to the transversal shape of the machine. They therefore have a horizontal base 81, a vertical wall 82, an inclined wall 83, such inclination being like that of a side 25, 26 of the structure 11 of the machine 10.

At a certain level on said inclined side is a means of support 84 for the piles 86 of strips 87.

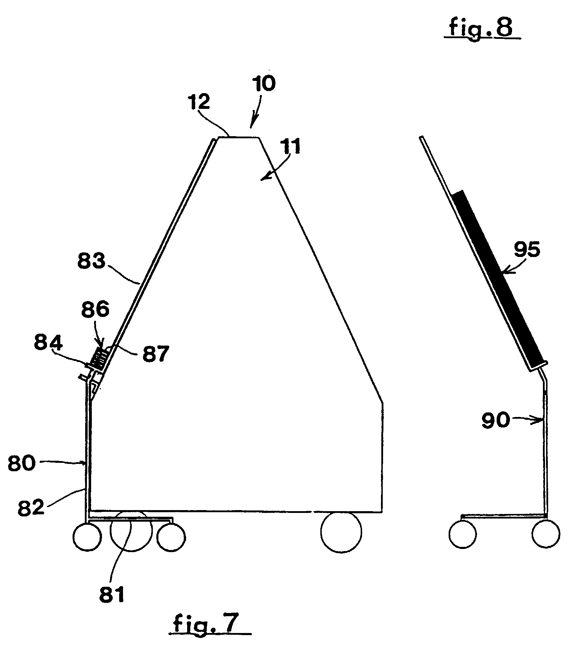

From the above explanation it is clear, as shown in Fig. 7, that the strips can be taken from the means of support 84 on the wall 83 of the loader and transferred to the central conveyor belt 13 on the machine 10, or vice versa.

The trolley 80 can of course transfer to another machine the piles of strips loaded on the loading machine, or else it can feed the loading machine with piles of strips taken from another machine.

In Fig. 7 the trolley 80 matches up against the machine, while in Fig. 8 a trolley 90, substantially the same as the trolley 80, has a pile 95 of strips ready for transfer to the belt 13 on the machine 10, or else to to another processing machine.

As the above invention has been described and explained solely as an example of its use, not limited to that here given and to show its essential features, numerous variations can be made to it in accordance with industrial, commercial or other requirements and other systems and means can be included without thereby departing from its sphere of operation.

It is therefore understood that the application to patent comprises every equivalent use of the concepts and every equivalent product executed and/or functioning according to any one or more of the characteristics set forth in the following claims.

## Claims

1. Machine (10) for loading, unloading and uniting strips (35) of leather and of synthetic materials in general,
characterized in that it comprises an oblong structure (11) whose top is substantially of a constant transversal section according to a regular trapezoid with a lesser base (12) facing upward, with an axial slit (17) from which emerges the upper part (16) of a continuous horizontal belt (13) supported at the two ends by two rollers (14, 15), there being made at said lesser base (12) a horizontal oblong body (40) with end articulations in the upper part of two parallel vertical plates (43, 44), said plates in turn having articulations (30, 31) at their lower part on the heads (20, 21) of the oblong structure, said oblong body (40) supporting along its central longitudinal axis a series of suction fans (60) one parallel to the other and orthogonal to said oblong body (40), there being suction cups (65) placed at the end of the piston (61) of their axial hydraulic and pneumatic cylinder (62), there being special kinematic devices (45-47, 50-52) that determine periodical oscillation of the plates (43, 44) and therefore of the oblong body (40) supported by them, from one side to the other of said base (12) of the trapezoid at the top of the oblong structure (11) around said articulations (30, 31) on its heads (20, 21) and that determine, for each oscillation, rotation alternately one way and the other, of said oblong body (40) around its end articulations on the upper part of the two plates (43, 44), there being placed orthogonally on the sides (25, 26) of the oblong structure (11), shelves (28, 29) for supporting piles (32, 33) of strips (35), the arc of oscillation of the oblong body (40) being such that, at the end of each oscillation, the axes of the pistons (61) of the suction fans (60) lie substantially parallel in relation to one side and the other (25, 26) of the oblong structure (11), it being thus possible, according to the production program, to pick up one or more strips (35) from one of the piles (32, 33) or from both piles (32, 33) alternately and to place said strips upon said continuous belt (13) to transfer them on to processing machines upstream or downstream of the machine, or else to reverse the operations.

2. Machine (10) as in claim 1,
characterized in that the kinematic device that determines oscillation of the pair of lateral plates (43, 44) on the oblong body (40) is the piston (46) of a hydraulic and pneumatic cylinder (45).

3. Machine (10) as in claim 1,
characterized in that the kinematic device that, for each oscillation of the plates (43, 44) and therefore of the oblong body (40), determines alternate rotation of said oblong body in the reverse direction, comprises a gear wheel (50) fixed to said oblong body (40), with centre in its axis of rotation, that meshes, by means of an idling gear wheel (51) whose axis lies on one of the plates (43), with a larger gear wheel (52) fixed to one head (20) of the oblong structure (11) of the machine.

4. Machine (10) as in claim 1,
characterized in that the shelves (28, 29) supporting the piles (32, 33) of strips (35) can be fixed at preferred heights on the inclined sides (25, 26) of the oblong structure (11).

5. Machine (10) as in claim 1,
characterized in that the shelves (28, 29) supporting the piles (32, 33) of strips (35) on the inclined sides (25, 26) of the oblong structure (11) are fixed to mechanical means which permit their height, in relation to the suction fans (60), to be varied as preferred.

6. Machine (10) as in claim 1,
characterized in that it comprises trolleys (80, 90) on wheels for loading and unloading the strips (35), their composition being such that their inner face substantially matches with the sides (25, 26) of the oblong structure (11) of the machine (10), said composition of the trolleys comprising a horizontal base (81), a vertical side (82) and an inclined side (83) so as to be substantially parallel with the inclined sides (25, 26) of the oblong structure (11) of the machine (10), there being placed on the outer face of said inclined side (83) of the trolleys (80, 90) a shelf (84) on which to lay the pile (86) of strips (87), so that by matching the trolley (8 0, 90) against the sides (25, 26) of the oblong structure (11) of the machine (10), the strips (87) on the pile (86) of strips (87) can be moved to the continuous conveyor belt (13) on the oblong structure (11) or the operation be conducted in the reverse direction.

7. Machine (10) as in claim 1,
characterized in that it is controlled by an electronic drive unit which, by means of adequate static and dynamic sensors, automatically adapts speed of the conveyor belt (13), of oscillation of the oblong body (40) and of movement of the suction fans (60) to the speed of the machine using the strips to which said strips (35, 87) are transferred or from which said strips (35, 87) are taken, and automatically adapts the various stages and various movements of the machine and therefore movement of the strips according to their different lengths.

## Patentansprüche

1. Maschine (10) zur Ladung, Entladung und Paarung von Streifen (35) aus Haut,
Fell und Kunststoffmaterial im allgemeinen, dadurch gekennzeichnet, daß sie eine längliche Struktur (11), mit einem Scheitel substantiell konstanter Quersektion einschliesst, gemäß einem regelmäßigen Trapez mit einer kleineren nach oben gerichteten Basis (12) mit axialem Schlitz (17), aus dem der obere Teil (16) eines horizontalen endlosen Bandes (13) herausragt, das an den beiden Enden von zwei Walzen (14,15) getragen wird , wobei in Übereinstimmung mit dieser kleineren Basis (12) ein länglicher horizontaler Körper (40) vorgesehen ist, mit Endgelenken am höheren Teil von zwei großen parallelen, vertikalen Platten (43,44), die ihrerseits mit Gelenken (30,31) am unteren Teil, auf den Köpfen (20,21) der länglichen Struktur versehen sind, wobei von diesem länglichen Körper (40) entlang seiner Längs-Mittelachse eine Reihe von untereinander parallelen und orthogonal zu jenem länglichen Körper (40) verlegten Exhaustoren (60) getragen wird, mit Saugkopf (65) welches am Ende des Kolbens (61) eines eigenen fluidischen, axialen Zylinders (62) verlegt ist, wobei angebrachte Getriebe (45-47, 50-52) für die Bestimmung der periodischen Schwingung der großen Platten (43,44) und folglich des von ihnen getragenen länglichen Körpers (40) von einer Seite zur anderen der genannten Basis (12) des Trapezes am Scheitel des länglichen Körpers (11) um die genannten Gelenke (30,31) auf seinen Köpfen (20,21) und auch für die Bestimmung für jede dieser Schwingungen, der alternativ im entgegengesetzten Sinne vorgesehenen Rotation dieses länglichen Körpers (40), um seine Endgelenke am höheren Teil der beiden großen Platten (43,44) sorgen und da an den Flanken (25,26) der länglichen Struktur (11), orthogonale Trag-Konsolen (28,29) für die Stapel (32,33) der Streifen (35) voreingestellt sind und da der Schwingungsbogen des länglichen Körpers (40) so ist, daß am Ende einer jeweiligen Schwingung die Achsen der Kolben (61) der Exhaustoren (60), sich fast parallel, hinsichtlich der einen und der anderen Flanke (25,26) der länglichen Struktur (11) verlegt ergeben und somit je nach Produktionsprogramm die Möglichkeit geboten wird, die Entnahme einer oder mehrerer Streifen (35) aus einem der Stapel (32,33] oder abwechselnd aus beiden Stapeln (32,33) und die Überführung dieser Streifen über das genannte endlose Band (13), zwecks deren Versetzung für die Verwendungen strom- ab und -aufwärts der Maschine , oder aber die entgegengesetzten Betriebsvorgänge vorzunehmen.

2. Maschine (10) wie unter Anspruch 1),
dadurch gekennzeichnet, daß das Getriebe welches die Schwingungen des Paares der seitlichen großen Platten (43,44) des länglichen Körpers (40) bestimmt, der Kolben (46) eines fluidischen Zylinders (45) ist.

3. Maschine (10) wie unter Anspruch 1),
dadurch gekennzeichnet, daß das Getriebe welches für iede Schwingung der großen Platten (43,44) und folglich des länglichen Körpers (40), die abwechselnde Drehung dieses letzteren im entgegengesetzten Sinne bestimmt, ein Zahnrad (50) einschliesst, das einteilig mit diesem länglichen Körper (40) ist, mit Mittelpunkt in der eigenen Drehachse, die mittels eines mit Achse versehenen untätigen Zahnrades (51), auf eine der grossen Platten (43), mit einem Zahnrad (52) von grösserem Durchmesser, welches einteilig mit einem Kopf (20) der länglichen Struktur (11) der Maschine ist., eingreift.

4. Maschine (10) wie unter Anspruch 1),
dadurch gekennzeichnet, daß die Trag-Konsolen (28,29) zum Stützen der Stapel (32,33) von Hautstreifen (35), beliebig auf bestimmte Höhen der geneigten Flanken (25,26) der länglichen Struktur (11) befestigt werden können.

5. Maschine (10) wie unter Anspruch (1),
dadurch gekennzeichnet, daß die Tragkonsolen (28,29) der Stapel (32,33) von Hautstreifen (35) an den geneigten Flanken (25,26) der länglichen Struktur(11), einteilig mit mechanischen Mitteln sind, die eine beliebibige Änderung ihrer Höhe in Bezug auf die Exhaustoren (60) ermöglichen.

6. Maschine wie unter Anspruch 1),
dadurch gekennzeichnet, daß sie die Fahrgestelle (80,90) auf Rädern, zur Ladung und zur Entladung der Streifen (35) einschließt, wobei dieselben eine in ihrem inneren Teil substantiell, mit den Flanken (25,26) der länglichen Struktur (11) der Maschine (10), aufeinanderpassende Struktur aufweisen und dabei diese Fahrgestellen-Zusammensetzung eine waagerechte Basis (81), eine senkrechte Flanke (82) und eine derart geneigte Flanke (83) einschließt, daß sich dieselbe substantiell parallel zu den schrägen Flanken (25,26) der länglichen Struktur (11) der Maschine (10) erweist, wobei an dieser geneigten Flanke (83) der Räder (80,90), in Übereinstimmung mit ihrem äußeren Gesicht, eine Konsole (84) bereitgestellt ist, die die Abstützung der Stapel (86) von Hautstreifen (87) zulässt und somit unter dem Aufeinanderpassen des Fahrgestells (80,90) mit den Flanken (25,26) der länglichen Struktur (11) der Maschine (10) die Möglichkeit bietet, nach und nach die Übertragung der Hautstreifen (87) von den Stapeln (86) der Streifen (87) zum kontinuerlichem Förderband (13) der länglichen Struktur (11) oder die umgekehrten Vorgänge zu bewirken.

7. Maschine (10) wie unter Anspruch 1),
dadurch gekennzeichnet, daß sie durch ein elektronisches Steuergehäuse gelenkt wird, das durch geeignete statische und dynamische Sensoren, für die automatische Anpassung der Geschwindigkeit des Förderbandes (13), der Schwingung des länglichen Körpers (40) und der Bewegung der Exhaustoren (60), für die Geschwindigkeit der Nutzmaschine, zu welcher die Hautstreifen (35,87) befördert werden oder von welcher jene Hautstreifen (35,87) aufgenommen werden und für die automatische Anpassung der verschiedenen Phasen und der verschiedenen Bewegungen der Maschine und somit der Verschiebung der Streifen, je nach deren Länge, sorgt.

## Revendications

1. Machine (10) pour le chargement, le déchargement et la jointure de lanières (35) de peau, de cuir et de matières synthétiques en général,
caractérisée par le fait qu'elle se compose d'une structure (11) oblongue avec sommet à section essentiellement transversale constante suivant un trapèze régulier dont la plus petite base (12) est tournée vers le haut, avec une fissure (17) axiale de laquelle sort la partie supérieure (16) d'une bande (13) continue horizontale soutenue à ses deux extrémités par deux rouleaux (14, 15), et que, en correspondance de cette petite base (12) est disposé un corps oblong (40) horizontal articulé, aux extrémités de sa partie supérieure, à deux plaques (43, 44) parallèles, verticales, elles-mêmes munies, dans leur partie inférieure, d'articulations (30, 31)les reliant aux côtés (20, 21) de la structure oblongue et soutenues par ledit corps oblong (40), le long de son axe longitudinal médian, d'une série d'aspirateurs (60) parallèles entre eux et perpendiculaires audit corps oblong (40), avec ventouse (65) d'aspiration située à l'extrémité du piston (61) d'un cylindre (62) fluidique, axial, équipé de dispositifs cinématiques (45-47, 50-52) servant à déterminer l'oscillation périodique des plaques (43, 44) et par conséquent du corps oblong (40) qu'elles soutiennent, d'un côté à l'autre de ladite base (12) du trapèze au sommet de la structure oblongue (11), autour desdites articulations (30, 31) sur ses côtés (20, 21) et à déterminer pour chacune de ces oscillations, la rotation alternativement en sens inverse dudit corps oblong (40) autour de ses articulations d'extrémité sur la partie supérieure des deux plaques (43, 44), des étagères (28, 29) orthogonales de support aux piles (32, 33) de lanières (35) étant disposées sur les côtés (25, 26) de la structure oblongue (11), l'arc d'oscillation du corps oblong (40) étant tel qu'au terme de chaque oscillation, les axes des pistons (61) des aspirateurs (60) sont disposés à peu près parallèlement respectivement à l'un et à l'autre des côtés (25, 26) de la structure oblongue (11), ce qui permet, suivant le programme de production, d'obtenir le prélèvement d'une ou de plusieurs lanières (35) de l'une des piles (32, 33) ou des deux (32, 33) alternativement et de transporter ces lanières sur ladite bande (13) pour les acheminer vers les utilisations en aval ou en amont de la machine ou encore pour les opérations inverses.

2. Machine (10) conformément à la revendication 1),
caractérisée par le fait que le cinématisme déterminant les oscillations du couple de plaques (43, 44) latérales du corps oblong (40) est le piston (46) d'un cylindre fluidique (45)

3. Machine (10) conformément à la revendication 1),
caractérisée par le fait que le cinématisme qui détermine pour chaque oscillation des plaques (43, 44) et donc du corps oblong (40) la rotation alternative de ce dernier en sens inverse, comprend une roue dentée (50), solidaire dudit corps oblong (40) avec centre dans son axe de rotation qui s'engrène, au moyen d'une roue libre (51) dentée avec axe sur l'une des plaques (43), dans une roue dentée (52) de plus grand diamètre, solidaire d'un côté (20) de la structure oblongue (11) de la machine.

4. Machine (10) conformément à la revendication 1),
caractérisée par le fait que les étagères (28, 29) supportant les piles (32, 33) de lanières (35) peuvent être fixées à des hauteurs déterminées, à volonté, sur les côtés (25, 26) inclinés de la structure oblongue (11).

5. Machine (10) conformément à la revendication 1),
caractérisée par le fait que les étagères (28, 29) des piles (32, 33) de lanières (35) sur les côtés (25, 26) inclinés de la structure oblongue (11), sont solidaires avec des organes mécaniques qui permettent de varier à volonté leur hauteur par rapport aux aspirateurs (60).

6. Machine (10) conformément à la revendication 1),
caractérisée par le fait qu'elle comprend des chariots (80, 90) à roulettes pour le chargement et le déchargement des lanières (35) dont la composition correspond essentiellement, dans leur partie intérieure, aux côtés (25, 26) de la structure oblongue (11) de la machine (10), cette composition des chariots comprenant une base (81) horizontale, un côté vertical (82) et un côté (83) incliné de façon à être pratiquement parallèle aux côtés (25, 26) inclinés de la structure oblongue (11) de la machine (10), et par le fait qu'est disposée, sur ce côté (83) incliné des chariots (80, 90), en correspondance de leur face extérieure, une étagère (84) qui permet de soutenir les piles (86) de lanières (87), de faire correspondre le chariot (80, 90) aux côtés (25, 26) de la structure oblongue (11) de la machine (10), et de transporter au fur et à mesure les lanières (87) des piles (86) de lanières (87) à la bande transporteuse (13) continue de la structure oblongue (11) ou bien d'effectuer les opérations inverses.

7. Machine (10) conformément à la revendication 1),
caractérisée par le fait qu'elle est commandée par une centrale électronique qui, au moyen de capteurs statiques et dynamiques, adapte automatiquement la vitesse de la bande transporteuse (13), de l'oscillation du corps oblong (40) et du mouvement des aspirateurs (60) à la vitesse de la machine utilisatrice vers laquelle sont acheminées les lanières (35, 87) ou de laquelle lesdites lanières (35, 87) sont prélevées, de même qu'elle adapte automatiquement les divers mouvements et phases de la machine et, par conséquent, le déplacement des lanières, suivant la longueur de ces dernières.
